# EUROPÄISCHE PATENTANMELDUNG

(11) **EP 1 213 197 A1**
(43) Veröffentlichungstag der Anmeldung: **12.06.2002**
(21) Anmeldenummer: 00126698.0
(22) Anmeldetag: 05.12.2000
(51) Int. Cl.: B60S 1/48, H05B 3/14

(54) **Durchlauferhitzer für Scheibenwischwasser**

(71) Anmelder: David + Baader DBK GmbH, 76870 Kandel/Pfalz (DE)
(72) Erfinder: Bohlender, Franz, 76870 Kandel (DE); Walz, Kurt, 76767 Hagenbach (DE); Niederer, Michael, 76744 Büchelberg (DE)
(74) Vertreter: Grünecker, Kinkeldey, Stockmair & Schwanhäusser Anwaltssozietät

(57) **Zusammenfassung**

Scheibenwischwasserdurchlauferhitzer zum Einbau in ein Kraftfahrzeug mit einer Flüssigkeitskammer (1) und mindestens einem Heizelement (2), wobei die Heizelemente (2) als Flachheizstäbe mit PTC-Heizelementen (4) ausgebildet sind und in die Flüssigkeitskammer (1) ragen, die Flüssigkeitskammer (1) so ausgebildet ist, dass die Heizelemente (2) im wesentlichen vollständig von der zu erwärmenden Flüssigkeit umströmbar sind und die Flüssigkeitskammer (1) ein Fassungsvermögen von maximal etwa 200ml aufweist.

## Beschreibung

Die Erfindung betrifft einen Durchlauferhitzer für Scheibenwischwasser, der sich zum Einbau in ein Kraftfahrzeug eignet.

Herkömmlicherweise wird Scheibenwischwasser zur Reinigung der Windschutzscheibe von Kraftfahrzeugen in einem Behälter im Kraftfahrzeug vorrätig gehalten. Damit das Scheibenwischwasser bei Minusgraden nicht gefriert, ist es mit einem Zusatz versehen, der den Gefrierpunkt absenkt. Auf diese Weise werden Schäden durch Gefrieren des Scheibenwischwassers im Vorratsbehälter und in dem Zuleitungssystem zu den Düsen vermieden, die das Scheibenwischwasser auf die Windschutzscheibe sprühen.

Neben einer Verschmutzung führt eine Vereisung ebenfalls zu einer beträchtlichen Beeinträchtigung der freien Sicht. Eine Vereisung tritt insbesondere dann auf, wenn das Kraftfahrzeug länger in einer Umgebung mit Temperaturen unterhalb von 0° C abgestellt worden ist.

Eine solche Vereisung lässt sich durch manuelle Entfernung mittels eines "Eiskratzers" beseitigen. Alternativ kann der Innenraum des Kraftfahrzeugs mittels einer Heizung vor dem Start erwärmt werden, so dass auch die Vereisung auf den Scheiben abtaut. Beide Vorgehensweisen sind jedoch aufwendig und langwierig.

Aufgabe der Erfindung ist es, eine Vorrichtung anzugeben, mit der auf einfache Weise eine schnelle Enteisung einer Windschutzscheibe möglich ist.

Dies wird mit Hilfe eines Scheibenwischwasserdurchlauferhitzers zum Einbau in ein Kraftfahrzeug gemäß der Lehre des Anspruchs 1 erreicht.

Erfindungsgemäß ist ein Durchlauferhitzer zum Einbau in ein Kraftfahrzeug vorgesehen, der Scheibenwischwasser vor dem Aufsprühen auf die Windschutzscheibe erhitzt. Durch Aufsprühen des heißen Wassers auf die Windschutzscheibe kann diese von einer Vereisung befreit werden. Dazu ist ein Durchlauferhitzer mit einem maximalen Fassungsvermögen von etwa 200 ml der zu erwärmenden Flüssigkeit vorgesehen. In eine solche Flüssigkeitskammer ragen Heizelemente, die als Flachheizstäbe mit PTC-Elementen ausgebildet sind. In der Flüssigkeitskammer sind die Heizelemente so angeordnet, dass diese im wesentlichen vollständig von der zu erwärmenden Flüssigkeit umströmt werden können. Eine kurze Aufheizperiode ergibt sich insbesondere aus der großen Oberfläche der Heizelemente im Vergleich zum Flüssigkeitsvolumen. Mit dem erfindungsgemäßen Durchlauferhitzer ist eine schnelle Aufheizung kleiner Flüssigkeitsmengen zur Weiterleitung mittels einer externen Pumpe in Richtung Windschutzscheibe möglich, um diese von Eis zu befreien.

Bei einem Durchlauferhitzer kompakter Bauform besteht die Gefahr, dass in den Durchlauferhitzer einströmendes kaltes Wasser auf dem kürzesten Weg innerhalb der Flüssigkeitskammer zu dem Anschluss strömt, über den das erwärmte Wasser den Durchlauferhitzer wieder verlässt. Nachteilig an einer solchen Strömung innerhalb der Flüssigkeitskammer ist ihre geringe Heizeffektivität, denn das Wasser strömt nicht oder nur kaum an der Oberfläche der Heizelemente vorbei und wird entsprechend schlecht erhitzt. Um einen solchen "Kurzschluss" im Fluss des Scheibenwischwassers innerhalb der Flüssigkeitskammer zu vermeiden, ist die Flüssigkeitskammer des Durchlauferhitzers gemäß einer bevorzugten Ausführungsform in zwei Kammern unterteilt, die durch einen Verbindungskanal miteinander verbunden sind. Durch eine solche Unterteilung lässt sich ein gezieltes Umströmen der Heizelemente und ein Vorbeiführen des zu beheizenden Mediums an der gesamten Heizoberfläche zur effektiven Aufheizung erreichen.

Bei einer Unterteilung einer Flüssigkeitskammer in einzelne Kammern, durch die die Flüssigkeit fließt, müssen für eine effektive Aufheizung des durchfließenden Wassers die Heizleistungen der Heizelemente in den einzelnen Kammern unterschiedlich geregelt werden. In die erste Kammer strömt kaltes Wasser ein. Das in die zweite Kammer strömende Wasser ist dagegen schon vorgewärmt. Aufwendig ist eine solche Regelung insbesondere dann, wenn eine konstante Endtemperatur bei variierenden Durchflussmengen, unterschiedlichen Ausgangstemperaturen und häufigen Unterbrechungen des Durchflusses erreicht werden soll. Dazu muss zumindest in oder am Ausgang der zweiten Kammer eine Art von "Ausgangskontrolle" durchgeführt werden, die je nach erforderlichem Heizbedarf die Heizleistung der Heizelemente in der zweiten Kammer steuert.

Erfindungsgemäß weist der Scheibenwischwasserdurchlauferhitzer Heizelemente auf, die als Flachheizstäbe mit PTC-Elementen ausgebildet sind. PTC-Bauelemente werden auf der Basis halbleitender Keramik hergestellt. Ihre Besonderheit liegt darin, dass sie bei einer charakteristischen Temperatur ihren elektrischen Widerstand sprunghaft ändern.

Vorteilhafterweise ist jede der Unterkammern mit einem Anschlussstutzen zur Zu- bzw. Ableitung des zu erwärmenden Mediums versehen. Dadurch lässt sich die Flüssigkeit gezielt durch beide Kammern an allen Heizelementen vorbeileiten. Ein besonders gutes Umströmen der Heizelemente wird dann erreicht, wenn die Anschlussstutzen bei einer länglichen Ausgestaltung der Unterkammern an dem Ende angeordnet sind, das dem internen Verbindungskanal zwischen beiden Kammern gegenüberliegt.

In jede der Unterkammern der Flüssigkeitskammer ragen jeweils zwei Heizelemente. Durch die dadurch bedingten engen Abstände der Heizelemente weisen die PTC-Heizelemente eine besonders große Heizoberfläche im Verhältnis zur Flüssigkeitsmenge auf und bewirken damit eine besonders schnelle Aufheizung der Flüssigkeit.

Das Gehäuse des Durchlauferhitzers ist vorzugsweise aus Kunststoff oder Aluminium gefertigt. Ein Kunststoffgehäuse ist leicht herzustellen und gut isolierend. Ein Gehäuse aus Aluminiumdruckguss ist jedoch bei hohen Drücken der aufzuheizenden Flüssigkeit besser geeignet.

Durch eine Aufheizung der Flüssigkeit auf etwa 70°C kann die Aufheizdauer besonders klein gehalten werden, ohne dass die Eignung zur Enteisung vermindert ist.

Vorteilhafte Ausgestaltungen der Erfindungen sind Gegenstand der Unteransprüche.

Bevorzugte Ausgestaltungen der Erfindung werden nachfolgend unter Bezugnahme auf die Figuren näher erläutert.
- Figur 1: zeigt eine Schnittansicht des erfindungsgemäßen Durchlauferhitzers entlang einer Linie B-B gemäß Figur 3.
- Figur 2: zeigt eine weitere Schnittansicht des erfindungsgemäßen Durchlauferhitzers, wobei die Schnittebene senkrecht zu der in Figur 1 steht.
- Figur 3: zeigt eine Ansicht des Gehäuses des Durchlauferhitzers von der Seite, auf der die elektrischen Anschlüsse herausgeführt werden.
- Figur 4: zeigt eine seitliche Ansicht des erfindungsgemäßen Durchlauferhit- zers, wobei die Abdeckung des Steuerungsteils entlang einer Linie A-A gemäß Figur 2 aufgeschnitten ist.

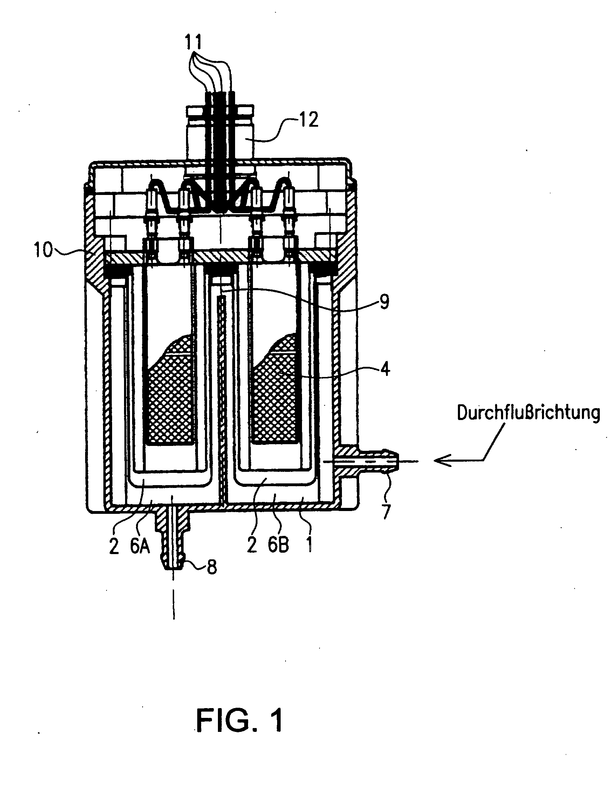

In Figur 1 ist eine Schnittansicht eines erfindungsgemäßen Durchlauferhitzers dargestellt. In dem Gehäuse 10 des Durchlauferhitzers befindet sich eine Flüssigkeitskammer 1. Die Flüssigkeitskammer 1 ist in zwei Unterkammern 6A und 6B unterteilt. Beide Kammern sind durch einen Verbindungskanal 9 miteinander verbunden. In beide Unterkammern 6A und 6B ragen Heizelemente 2 herein. Die Heizelemente 2 sind stabförmig als Flachheizstäbe mit PTC-Heizelementen 4 ausgebildet. Das Gehäuse der Heizelemente 2 ist vorzugsweise aus Aluminium gefertigt.

Flachheizstäbe der vorgenannten Art enthalten mehrere flache PTC-Heizelemente 4, die gegebenenfalls von einem Trägerelement mit darin vorhandenen Durchbrüchen für die Aufnahme der PTC-Heizelemente auf gegenseitigem Abstand gehalten und zwischen zwei Elektrodenplatten eingeklemmt sind, die den PTC-Elementen Strom zuführen. Die in den PTC-Elementen 4 entwickelte Wärme wird von ihren Flachseiten nach außen abgegeben.

Eine Befestigung der Heizelemente an dem Gehäuse des Durchlauferhitzers kann folgendermaßen erfolgen. Die Gehäuse der Heizelemente besitzen auf der Befestigungsseite einen angeformten Flansch, der mittels einer Flachdichtung druckdicht mit dem Gehäuse des Durchlauferhitzers verschraubt wird. Alternative Befestigungen der Heizelemente sind jedoch ebenfalls möglich.

Die Heizelemente 2 besitzen eine sehr geringe Masse, eine sehr gute Wärmeleitfähigkeit und eine große Oberfläche. Sie sind in der Flüssigkeitskammer 1 eng beabstandet eingebaut, so dass das zu beheizende Medium an der gesamten Heizoberfläche vorbeigeführt werden kann. Dazu weist jede der Unterkammern 6A und 6B einen Anschlussstutzen zur Zu- bzw. Abführung der zu erwärmenden Flüssigkeit auf. In Figur 1 ist eine bevorzugte Ausführungsform dargestellt, bei der ein Anschlussstutzen 7 seitlich an einer ersten Unterkammer 6B angebracht ist und ein zweiter Anschlussstutzen 8 an der Unterseite der zweiten Kammer 6A. Andere Anordnungen der Anschlussstutzen 7, 8 sind jedoch ebenso möglich.

Damit die Heizelemente möglichst ganz umströmt werden können, werden die beiden Anschlussstutzen 7 und 8 an einem Ende der vorzugsweise länglich ausgebildeten Unterkammern 6A und 6B angebracht. Am gegenüberliegenden Ende der Unterkammern 6A, 6B ist der Verbindungskanal 9 vorgesehen.

Auf diese Weise kann beim Betrieb des Durchlauferhitzers die zu erwärmende Flüssigkeit durch den Anschlussstutzen 7 an einem Ende in die Flüssigkeitskammer 1 einströmen, und zwar von einem vorzugsweise extern im Fahrzeug angeordneten Vorratsbehälter. Die Flüssigkeit fließt anschließend entlang der Oberfläche eines Heizelementes 2 bis zum Verbindungskanal 9 und durch diesen in die Nachbarkammer. In der zweiten Unterkammer strömt die Flüssigkeit in entsprechender Weise entlang der Oberfläche eines Heizelementes 2 zum anderen Ende der zweiten Unterkammer 6A zum Anschlussstutzen 8, durch den die erwärmte Flüssigkeit in Richtung Windschutzscheibe geleitet werden kann.

In einer alternativen Ausgestaltung der Erfindung kann auch nur eine einzige Flüssigkeitskammer vorgesehen sein, bei der die Anschlussstutzen für den Zu- und Abfluss der Flüssigkeit an gegenüberliegenden Enden angeordnet sind, oder eine Mehrzahl von hintereinandergeschalteten Kammern, durch die die Flüssigkeit jeweils an den in diesen angeordneten Heizelementen vorbei geleitet werden kann.

Die Anzahl der Heizelemente richtet sich nach der aufzuheizenden Flüssigkeitsmenge und der erwünschten Aufheizzeit. Je schneller die Aufheizung der Flüssigkeit erfolgen soll und um so größer die zu erwärmende Flüssigkeitsmenge ist, desto mehr Heizelemente müssen in dem Durchlauferhitzer vorgesehen sein.

An einen der Anschlussstutzen 7, 8 ist eine nicht dargestellte Pumpe angeschlossen. Diese Pumpe befördert die Flüssigkeit in Abhängigkeit von Signalen einer Steuereinheit in Richtung Windschutzscheibe.

Um eine schnelle und effiziente Erwärmung des Scheibenwischwassers auf I etwa 70° zu bewirken, weist die Flüssigkeitskammer 1 eine Kapazität von nur etwa 100 ml auf. Maximal hat die Flüssigkeitskammer ein Fassungsvermögen von vorzugsweise etwa 200 ml. Bei solch geringem Fassungsvermögen kann die Baugröße des Durchlauferhitzers besonders klein gehalten werden. Alternativ kann die Flüssigkeitskammer auch als Behälter für Scheibenwischwasser ausgebildet sein, in dem das gesamte Scheibenwischwasser aufgeheizt wird.

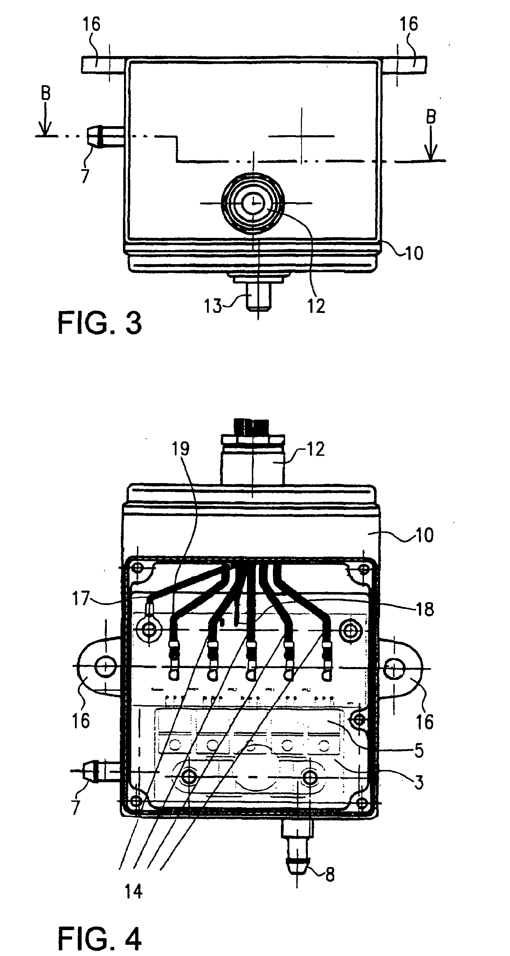

In Figur 1 ist im oberen Abschnitt die Stromzuführung zu den Heizelementen 2 zu erkennen. Zum einen werden alle Heizelemente 2 über Leitungen 11 mit Masse verbunden. Im dargestellten Ausführungsbeispiel werden jeweils von den beiden innenliegenden Kontakten Leitungen 11 zum Massebolzen über einen Anschlussstutzen 12 herausgeführt. Die beiden äußeren Kontakte der Heizelemente 2 sind über eine Steuerschaltung mit Plus verbunden, wie in Verbindung mit Figur 4 im einzelnen beschrieben ist.

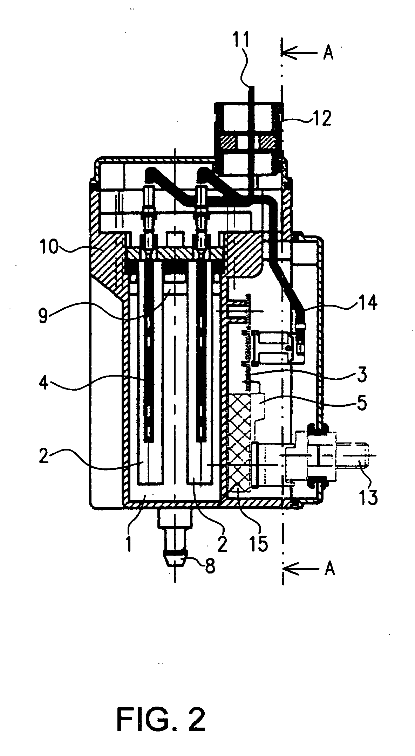

Figur 2 zeigt eine seitliche Schnittansicht des erfindungsgemäßen Durchlauferhitzers. Die Schnittebene dieser Darstellung steht senkrecht auf der von Figur 1. Gleiche Bauelemente sind in dieser Figur mit gleichen Bezugszeichen versehen. In der linken Hälfte ist ein Schnitt durch eine Unterkammer 6A, 6B der Flüssigkeitskammer 1 zu erkennen. An die Flüssigkeitskammer 1 anschließend ist ein Raum für die Steuerelektronik 3 vorgesehen. Diese Steuerelektronik enthält elektrische Schaltelemente 5, die jeweils die Plusleitung den einzelnen Heizelementen 2 zuführt. Der über den Anschluss 13 zugeführte Strom wird von den Schaltelementen 5 über die jeweiligen Kabel 14 jedem Heizelement zugeführt.

Die Schaltelemente 5 und mögliche weitere wärmeerzeugende Bauelemente der Steuereinheit sind vorzugsweise wärmeleitend mit der Flüssigkeitskammer 1 verbunden. Gemäß einem bevorzugten Ausführungsbeispiel der Erfindung sind die elektrischen Schaltelemente 5 dazu auf einer Aluminiumplatte 15 angeordnet, die sich in einer wärmeleitenden Verbindung mit der Flüssigkeitskammer 1 befindet. Auf diese Weise kann eine Verlustwärme der Halbleiterschaltelemente 5 ebenfalls zur Erwärmung der Flüssigkeit in der Flüssigkeitskammer 1 verwertet werden.

Figur 3 zeigt eine seitliche Ansicht des Gehäuses des Durchlauferhitzers. In dieser Ansicht ist die Schnittlinie B-B dargestellt, die zu der Ansicht nach Figur 1 führt. Die Ansicht des Gehäuses 10 zeigt auf der Oberseite den Anschlussstutzen 12 für den Masseanschluss der Heizelemente 2. In der Ebene der Rückseite des Gehäuses 10 sind seitlich Befestigungselemente 16 angeordnet. Solche Befestigungselemente können jedoch auch in anderer Ausgestaltung an anderen Stellen vorgesehen sein.

Figur 4 zeigt einen Schnitt gemäß der Linie A-A aus Figur 2. Zu dieser Schnittansicht ist der Aufbau der Steuerelektronik zu erkennen. Die in diesem Fall nebeneinander angeordneten elektrischen Schaltelemente 5 der Steuerelektronik 3 sind jeweils einem der Heizelemente 2 zugeordnet. Die elektrischen Ströme werden über Leitungen 14 den Heizelementen 2 zugeführt. Die elektronische Steuerung selbst ist über Leitung 17 mit Masse verbunden und enthält Steuerungssignale über die Leitung 18. Ein zusätzliches Schaltelement 5 (in der Darstellung ganz links) ist für die Steuerung der Pumpe (nicht dargestellt) zuständig. Auch die Abwärme dieses Schaltelementes wird in einer bevorzugten Ausgestaltung zur Erwärmung der Flüssigkeit benutzt. Der von diesem Schaltelement geschaltete Strom wird über eine Leitung 19 über den Anschlussstutzen 12 der Pumpe zugeführt.

Das Gehäuse dieses Durchlauferhitzers ist vorzugsweise aus Kunststoff. Kunststoff hat den besonderen Vorteil, dass es leicht und günstig herzustellen ist und gleichzeitig auch isoliert. In besonderen Fällen, nämlich bei besonders hohen Drücken, kann das Gehäuse auch aus Aluminiumdruckguss hergestellt werden. In beiden Fällen weist das Gehäuse nur eine sehr geringe Masse auf und ist dennoch ausreichend stabil.

Bei dem Konzept des erfindungsgemäßen Durchlauferhitzers weisen die PTC-Heizelemente eine geringe Masse, eine sehr gute Wärmeleitfähigkeit und eine große Oberfläche auf und sind in das Gehäuse so eingebaut, dass ein zu beheizendes Medium an der gesamten Heizoberfläche vorbeigeführt wird.

## Patentansprüche

1. Scheibenwischwasserdurchlauferhitzer für zum Einbau in ein Kraftfahrzeug mit einer Flüssigkeitskammer (1) und mindestens einem Heizelement (2), wobei
die Heizelemente (2) als Flachheizstäbe mit PTC-Heizelementen (4) ausgebildet sind und in die Flüssigkeitskammer (1) ragen,
die Flüssigkeitskammer (1) so ausgebildet ist, dass die Heizelemente (2) im wesentlichen vollständig von der zu erwärmenden Flüssigkeit umströmbar sind, und
die Flüssigkeitskammer (1) ein Fassungsvermögen von maximal etwa 200 ml aufweist.

2. Scheibenwischwasserdurchlauferhitzer nach Anspruch 1, **dadurch gekennzeichnet, dass** sich die Flüssigkeitskammer (1) aus zwei Unterkammern (6A, 6B) zusammensetzt, die durch einen Verbindungskanal (9) miteinander verbunden sind.

3. Scheibenwischwasserdurchlauferhitzer nach Anspruch 2, **dadurch gekennzeichnet, dass** jede der Unterkammern (6A, 6B) einen Anschlussstutzen (7, 8) zum Zu- oder Abführen der Flüssigkeit aufweist.

4. Scheibenwischwasserdurchlauferhitzer nach Anspruch 2 oder 3, **dadurch gekennzeichnet, dass** die Anschlussstutzen (7, 8) an einem Ende der Kammern (6A, 6B) angeordnet sind und der Verbindungskanal (9) am gegenüberliegenden Ende.

5. Scheibenwischwasserdurchlauferhitzer nach einem der Ansprüche 2 bis 4, **dadurch gekennzeichnet, dass** in jede der Unterkammern (6A, 6B) jeweils zwei Heizelemente (2) ragen.

6. Scheibenwischwasserdurchlauferhitzer nach einem der Ansprüche 1 bis 5, **dadurch gekennzeichnet, dass** das Gehäuse (10) des Durchlauferhitzers aus Kunststoff oder Aluminium hergestellt ist.

7. Scheibenwischwasserdurchlauferhitzer nach einem der Ansprüche 1 bis 6, **dadurch gekennzeichnet, dass** das Scheibenwischwasser auf etwa 70°C erwärmt wird.
